# EUROPÄISCHE PATENTANMELDUNG

(11) **EP 4 339 478 A1**
(43) Veröffentlichungstag der Anmeldung: **20.03.2024**
(21) Anmeldenummer: 23187292.0
(22) Anmeldetag: 24.07.2023
(51) Int. Cl.: F16D 48/06

(54) **KUPPLUNGSANORDNUNG, ANTRIEBSANORDNUNG UND VERFAHREN ZUR BESTIMMUNG EINER ENDPOSITION EINES KUPPLUNGSELEMENTS EINER KUPPLUNGSANORDNUNG**

(30) Priorität: 19.09.2022 DE 102022209818
(71) Anmelder: Robert Bosch GmbH, 70442 Stuttgart (DE)
(72) Erfinder: Bast, Frank, 71732 Tamm (DE)

(57) **Zusammenfassung**

Die Erfindung betrifft eine Kupplungsanordnung (10) umfassend einen Antrieb (12), einen Abtrieb (14), eine Kupplungsmechanik mit einer Kupplung (16) und einem Kupplungselement (18), wobei die Kupplung (16) durch Bewegen des Kupplungselements (18) in eine erste Richtung (20) in einen geschlossen Zustand überführt werden kann, wobei die Kupplung (16) durch Bewegen des Kupplungselements (18) in eine zweite Richtung (22) in einen geöffneten Zustand überführt werden kann, und eine Aktuierungsmechanik mit einem Aktuator (24), wobei das Kupplungselement (18) mittels des Aktuators (24) in die erste Richtung (20) und/oder in die zweite Richtung (22) bewegt werden kann, wobei die Kupplungsanordnung (10) mindestens eine Endposition aufweist, in der das Kupplungselement (18) maximal in die erste oder die zweite Richtung (20, 22) bewegbar oder bewegt ist, wobei die Kupplungsanordnung (10) derart eingerichtet ist, dass zur Ermittlung der Endposition das Kupplungselement (18) mittels des Aktuators (24) in die Endposition bewegbar ist und der Aktuator (24) mit einem Schwingungssignal (28) moduliert werden kann, um ein Entspannen der Kupplungs- und/oder der Aktuierungsmechanik zu fördern und ein Wegbewegen des Kupplungselements (18) aus der Endposition zu verhindern, wobei aus einem Soll-Verlauf (30) des modulierten Schwingungssignals (28) des Aktuators (24) eine effektive Kraft (32) auf das Kupplungselement (18) resultiert. Die Erfindung betrifft zudem eine Antriebsanordnung und ein Verfahren zur Bestimmung einer Endposition eines Kupplungselements (18) einer Kupplungsanordnung (10).

## Beschreibung

### Stand der Technik

Die Erfindung betrifft eine Kupplungsanordnung, insbesondere für eine Antriebsanordnung, mit Merkmalen des Anspruchs 1, eine Antriebsanordnung, insbesondere für ein Fahrzeug, mit Merkmalen des Anspruchs 7 und ein Verfahren zur Bestimmung einer Endposition eines Kupplungselements einer Kupplungsanordnung mit Merkmalen des Anspruchs 8.

Fahrzeuge mit einem Primärantrieb, bei welchem bspw. eine elektrische Maschine als Sekundärantrieb (E-Achse) angekoppelt bzw. abgekoppelt werden kann (Disconnect-Funktion) sind aus dem Stand der Technik bekannt. Der Sekundärantrieb wird üblicherweise in Fahrsituationen abgekoppelt, in denen bspw. die Leistung des Primärantriebs für die jeweilige Fahrsituation ausreichend ist. Der Sekundärantrieb kann eingekoppelt werden, wenn bspw. das Antriebs- und/oder das Rekuperationsvermögen des Sekundärantriebs benötigt wird. Durch das Abkoppeln kann bspw. die Effizienz des Gesamtantriebs erhöht werden.

Der Sekundärantrieb kann bspw. mittels einer Kupplung, deren Kupplungselement mittels eines Aktuators ein- und ausgerückt werden kann, angekoppelt bzw. abgekoppelt werden. Mittels eines Sensors im Aktuator oder an der Kupplung können Informationen über den Zustand der Kupplung bzw. die Position des Kupplungselements bereitgestellt werden, d. h. ob die Kupplung geschlossen oder geöffnet ist oder evtl. auch ob sich die Kupplung in einem Zwischenzustand befindet. Für die Ansteuerung des Aktuators, insbesondere bei elektromechanischer Betätigung, stellt die Kenntnis der Position der mechanischen Endpositionen des Kupplungselements der Kupplung einen wichtigen Parameter dar.

Das Identifizieren der physikalisch korrekten mechanischen Endpositionen des Kupplungselements der Kupplung ist bei der Ansteuerung der Kupplung von zentraler Bedeutung. In der Regel werden diese Positionen identifiziert, indem man das Kupplungselement der Kupplung mittels des Aktuators so weit wie möglich in Richtung der Endposition bewegt, bis eine Anschlagsposition erreicht ist und, unter Aufrechterhaltung der Aktuatorkraft, keine weitere Bewegung mehr möglich ist. Diese erreichte Position wird dann in der Steuerung als Endposition abspeichert.

Ist die Positionssensorik nicht direkt an der Kupplung, sondern in der Betätigungsmechanik oder im Aktuator integriert und die Endlage wie vorstehend beschrieben bei anstehender Aktuatorkraft (Aktuator belastet während des Ermittlungvorgangs der Endlage) bestimmt, dann fließen die Bauteilsteifigkeiten der im Kraftfluss angeordneten Komponenten in die Positionsbestimmung mit ein. Da insbesondere die vom Aktuator aufgebrachte Kraft sowie die Steifigkeit der mechanischen Bauteile streuen können, kann die so identifizierte Endposition stark toleranzbehaftet sein.

Um dies zu vermeiden, kann nach Erreichen der Endposition die Aktuatorkraft zurückgenommen und erst dann die Position, die sich nach dem Entspannen der Mechanik einstellt, als Endposition identifiziert werden. Um das Entspannen zu begünstigen, kann während der Entspannphase die Kraft am Aktuator (über eine Sollwertvorgabe) hochfrequent moduliert werden, um Reibungen in der mechanischen Kette zu reduzieren (Dither). Der Kraftverlauf bei einem solchen Schwingungssignal entspricht im Allgemeinen einem Sägezahn-, Dreieck-, Puls- oder Sinus-Verlauf mit wechselndem Vorzeichen symmetrisch um die Nullachse, so dass das Integral über ein Schwingungsintervall des Schwingungssignals null ergibt (Soll-Verlauf).

Nachteilig dabei ist, dass durch Abweichungen bzw. Ungenauigkeiten bei der Ansteuerung des Aktuators (Abweichungen Strom, Regeldruck) und Reibungseigenschaften innerhalb der mechanische Kette sich bei einem symmetrischen Soll-Verlauf ein asymmetrischer Ist-Verlauf des Schwingungssignals einstellen kann, welcher zu einem Positionsdrift des Kupplungselements, insbesondere weg von der physikalischen Endlage, führen kann.

### Offenbarung der Erfindung

Erfindungsgemäß wird eine Kupplungsanordnung, insbesondere für eine Antriebsanordnung vorgeschlagen, umfassend einen Antrieb, insbesondere eine elektrische Maschine, einen Abtrieb, insbesondere eine Achse einer Antriebsanordnung, und eine Kupplungsmechanik mit einer Kupplung und einem Kupplungselement. Dabei kann die Kupplung durch Bewegen bzw. Verschieben des Kupplungselements in eine erste Richtung in einen geschlossenen Zustand (Kupplung geschlossen) überführt werden. In dem geschlossenen Zustand der Kupplung sind der Antrieb und der Abtrieb mittels des Kupplungselements (bzw. mittels der Kupplung) insbesondere drehfest miteinander gekoppelt. Die Kupplung kann durch Bewegen bzw. Verschieben des Kupplungselements in eine zweite Richtung in einen geöffneten Zustand (Kupplung geöffnet) überführt werden. In dem geöffneten Zustand sind der Antrieb und der Abtrieb mittels des Kupplungselements (bzw. mittels der Kupplung) voneinander entkoppelt (drehfrei).

Die Kupplungsanordnung umfasst eine Aktuierungsmechanik mit einem Aktuator, wobei das Kupplungselement mittels des Aktuators in die erste Richtung und/oder in die zweite Richtung bewegt werden kann. Die Kupplungsanordnung weist mindestens eine Endposition auf, in der das Kupplungselement maximal in die erste oder die zweite Richtung bewegbar oder bewegt ist. Die Kupplungsanordnung (insbesondere der Aktuator) ist derart eingerichtet und/oder konfiguriert, dass zur Ermittlung der Endposition das Kupplungselement mittels des Aktuators in die Endposition bewegbar ist und der Aktuator mit einem Schwingungssignal moduliert werden kann, um ein Entspannen der Kupplungs- und/oder der Aktuierungsmechanik zu fördern und um ein Wegbewegen des Kupplungselements aus der Endposition zu verhindern, wobei aus dem Soll-Verlauf des modulierten Schwingungssignals des Aktuators eine (gerichtete) effektive Kraft auf das Kupplungselement resultiert.

Damit können die mechanischen Spannungen, insbesondere Spannungen in der Kupplungs- und/oder der Aktuierungsmechanik, gelöst und das Wegbewegen des Kupplungselements aus der Endposition verhindert werden. Der Kontakt zur Anschlagsposition bleibt somit erhalten.

Die Kupplung kann als Klauenkupplung ausgebildet sein. Das Kupplungselement kann als Kupplungsmuffe ausgebildet sein. Die erste Richtung und die zweite Richtung können einander entgegengesetzt orientiert sein. Die Kupplung kann mittels des Aktuators betätigt werden. Die Kupplungsanordnung kann eine Positionssensorik zur Ermittlung der Endposition (bzw. der Position) des Kupplungselements aufweisen. Die Kupplungsanordnung kann ein Speicherelement zur Speicherung der Endposition (bzw. Position) des Kupplungselements aufweisen.

Gemäß einer Weiterbildung kann in der Endposition das Kupplungselement an einem Anschlag anliegen, der eine weitere Bewegung des Kupplungselements in Richtung des Anschlags (in erste oder zweite Richtung) verhindert, wobei die aus dem Soll-Verlauf des modulierten Schwingungssignals des Aktuators resultierende effektive Kraft in Richtung des Anschlags ausgerichtet ist. Das Kupplungselement kann in der Endposition den Anschlag kontaktieren. Der Anschlag kann Bestandteil der Kupplungsanordnung sein. Ebenso denkbar ist, dass der Anschlag kein Bestandteil der Kupplungsanordnung, also ein externes Element, sein kann. Damit kann verhindert werden, dass der Kontakt zwischen dem Kupplungselement und dem Anschlag gelöst wird.

Gemäß einer Weiterbildung kann der Aktuator derart ausgebildet und/oder eingerichtet bzw. konfiguriert sein, dass der Soll-Verlauf des modulierten Schwingungssignals des Aktuators symmetrisch ist. Die Nullachse des Soll-Verlaufs des Schwingungssignals kann der Endposition des Kupplungselements entsprechen. Die Nullachse des Soll-Verlauf des Schwingungssignals kann in Bezug auf die Endposition, insbesondere in Richtung des Anschlags, verschoben sein.

Mit "symmetrisch" ist vorliegend eine Achsensymmetrie in Bezug auf die Nullachse des Soll-Verlaufs des Schwingungssignals gemeint. Mit anderen Worten, der Soll-Verlauf des modulierten Schwingungssignals kann eine gleichgroße (positive sowie negative) Auslenkung aus der Nullachse heraus aufweisen. Bei der Schwingung des Schwingungssignals (bzw. dem Soll-Verlauf des Schwingungssignals) kann es sich um eine harmonische Schwingung handeln, die Schwingung kann also mit Sinus bzw. Cosinus beschrieben werden. Der Soll-Verlauf des Schwingungssignals kann als Sägezahn-, Dreieck- oder Puls-Verlauf ausgebildet sein.

Gemäß einer Weiterbildung kann der Aktuator derart ausgebildet und/oder eingerichtet bzw. konfiguriert sein, dass der Soll-Verlauf des modulierten Schwingungssignals des Aktuators zumindest zeitweise asymmetrisch ist. Der Soll-Verlauf des modulierten Schwingungssignals des Aktuators kann insbesondere am Ende des Soll-Verlaufs asymmetrisch sein. Die aus dem Soll-Verlauf des Schwingungssignals resultierende effektive Kraft und deren Orientierung können aus dem asymmetrischen Teil des Soll-Verlaufs des Schwingungssignals resultieren. Mit anderen Worten, die aus dem asymmetrischen Abschnitt des Soll-Verlaufs des Schwingungssignals erzeugte effektive Kraft kann größer sein als die aus dem symmetrischen Abschnitt des Soll-Verlaufs des Schwingungssignals erzeugte effektrive Kraft.

Mit "asymmetrisch" ist vorliegend eine Achsenasymmetrie in Bezug auf die Nullachse des Soll-Verlauf des Schwingungssignals gemeint. D. h. die positive Auslenkung und die negative Auslenkung aus der Nullachse heraus sind nicht gleich groß.

Gemäß einer Weiterbildung kann der Soll-Verlauf des Schwingungssignals im Bereich von 15 bis 200 Hz (Hertz) liegen. Der Soll-Verlauf des Schwingungssignals kann hochfrequent sein. Der Soll-Verlauf des Schwingungssignals kann im kHz (Kilohertz) Bereich liegen, insbesondere höher als 9 kHz sein.

Gemäß einer Weiterbildung kann der Aktuator elektromechanisch ausgebildet sein. Ebenso denkbar ist es, dass der Aktuator bspw. pneumatisch oder hydraulisch ausgebildet sein kann.

Erfindungsgemäß wird eine Antriebsanordnung, insbesondere für ein Fahrzeug, mit mindestens einer Kupplungsanordnung gemäß obiger Ausführungen vorgeschlagen. Hinsichtlich der damit erzielbaren Vorteile wird auf die diesbezüglichen Ausführungen zur Kupplungsanordnung verwiesen. Zur weiteren Ausgestaltung der Antriebsanordnung können die im Zusammenhang mit der Kupplungsanordnung beschriebenen und/oder die nachfolgend noch erläuterten Maßnahmen dienen.

Die Antriebsanordnung kann bspw. als E-Achse ausgebildet sein oder Bestandteil einer E-Achse bilden.

Erfindungsgemäß wird ein Verfahren zur Bestimmung einer Endposition eines Kupplungselements einer Kupplungsanordnung vorgeschlagen. Das Verfahren umfasst die Schritte:
Bereitstellen einer Kupplungsanordnung gemäß obiger Ausführungen.

Bewegen des Kupplungselements der Kupplungsanordnung in die Endposition.

Modulieren des Aktuators mit einem Schwingungssignal, um ein Bewegen des Kupplungselements aus der Endposition zu verhindern, wobei aus einem Soll-Verlauf des Schwingungssignals des Aktuators eine (gerichtete) effektive Kraft auf das Kupplungselement resultiert.

Hinsichtlich der damit erzielbaren Vorteile wird auf die diesbezüglichen Ausführungen zur Kupplungsanordnung verwiesen. Zur weiteren Ausgestaltung des Verfahrens können die im Zusammenhang mit der Kupplungsanordnung beschriebenen und/oder die nachfolgend noch erläuterten Maßnahmen dienen.

Gemäß einer Weiterbildung kann der Aktuator, insbesondere in einem ersten Schwingungsbetriebszustand, mit einem symmetrischen Soll-Verlauf des Schwingungssignals moduliert werden.

Alternativ oder ergänzend kann der Aktuator zumindest zeitweise, insbesondere in einem zweiten Schwingungsbetriebszustand, mit einem asymmetrischen Soll-Verlauf des Schwingungssignals moduliert werden. Dabei kann die aus dem Soll-Verlauf des Schwingungssignals resultierende effektive Kraft und deren Orientierung aus dem asymmetrischen Teil des Soll-Verlaufs des Schwingungssignals resultieren.

Das Verfahren kann weiter die Schritte umfassen:
Ermitteln der Endposition mittels einer Positionssensorik.

Abspeichern der ermittelten Endposition in einem Speicherelement.

Nachfolgend werden Ausführungsformen der Erfindung unter Bezugnahme auf die beiliegenden Zeichnungen erläutert. Es zeigen:
- Figur 1: eine schematische Darstellung einer Kupplungsanordnung;
- Figur 2: ein Schwingungssignal gemäß dem Stand der Technik;
- Figur 3: ein Schwingungssignal gemäß einem ersten Ausführungsbeispiel; und
- Figur 4: ein Schwingungssignal gemäß einem zweiten Ausführungsbeispiel

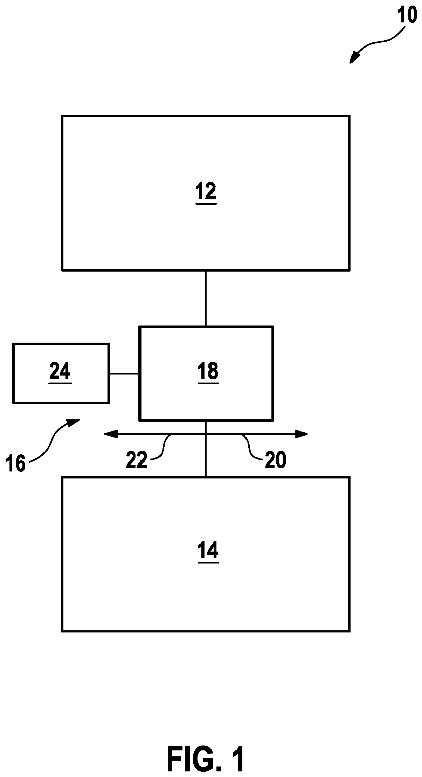

Die Kupplungsanordnung trägt in Figur 1 insgesamt das Bezugszeichen 10. Die Kupplungsanordnung 10 umfasst einen Antrieb 12 und ein Abtrieb 14. Die Kupplungsanordnung 10 umfasst eine Kupplungsmechanik. Die Kupplungsmechanik umfasst eine Kupplung 16 mit einem Kupplungselement 18. Die Kupplung 16 und das Kupplungselement 18 sind zwischen dem Antrieb 12 und dem Abtrieb 14 angeordnet. Die Kupplungsanordnung 10 umfasst eine Aktuierungsmechanik mit einem Aktuator 24. Mittels des Aktuators 24 kann das Kupplungselement 18 in eine erste Richtung 20 und/oder eine zweite Richtung 22 bewegt bzw. verschoben werden.

Durch das Bewegen des Kupplungselements 18 in die erste Richtung 20 kann die Kupplung 16 vorliegend in einen geschlossenen Zustand überführt werden, in dem der Antrieb 12 und der Abtrieb 14 im Beispiel drehfest miteinander gekoppelt sind. Durch das Bewegen des Kupplungselements 18 in die zweite Richtung 22 kann die Kupplung 16 vorliegend in einen geöffneten Zustand überführt werden, in dem der Antrieb 12 und der Abtrieb 14 voneinander entkoppelt sind.

Die Kupplungsanordnung 10 weist mindestens eine Endposition auf, in der das Kupplungselement 18 maximal in die erste oder in die zweite Richtung 20, 22 bewegbar ist.

Zur Ermittlung der Endposition wird das Kupplungselement 18 mittels des Aktuators 24 in die Endposition bewegt und der Aktuator 24 mit einem Schwingungssignal 28 moduliert.

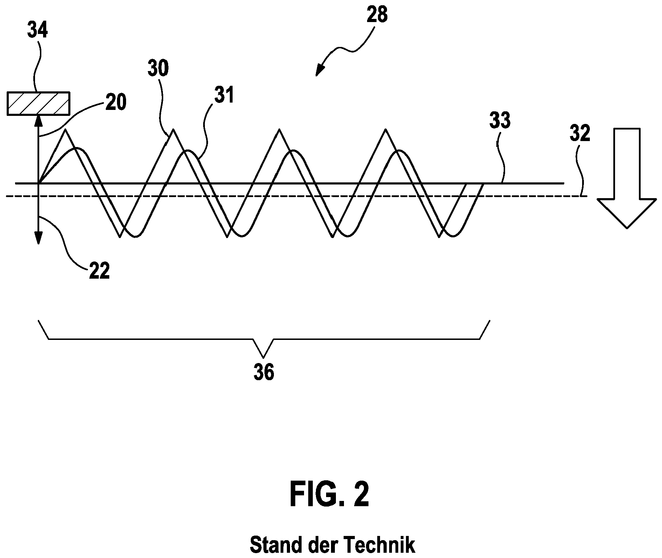

Figur 2 zeigt ein solches Schwingungssignal 28 gemäß dem Stand der Technik. Das Schwingungssignal 28 weist einen Soll-Verlauf 30 und einen Ist-Verlauf 31 auf. Vorliegend liegt das Kupplungselement 18 in der Endposition an einem Anschlag 34 an. Das Kupplungselement 18 ist der besseren Übersicht halber in Figur 2 nicht dargestellt. Der Soll-Verlauf 30 ist symmetrisch um eine Nullachse 33 des Schwingungssignals 28 ausgebildet (vgl. Bz. 36 repräsentierend einen symmetrischen Verlauf bzw. Abschnitt). Aufgrund von Abweichungen bzw.

Ungenauigkeiten bei der Ansteuerung des Aktuators 24 und Reibungseigenschaften innerhalb der mechanische Kette kann sich bei dem in Bezug auf die Nullachse 33 symmetrischen Soll-Verlauf 30 (vgl. Bz. 36) ein in Bezug auf die Nullachse 33 asymmetrischer Ist-Verlauf 31 des Schwingungssignals 28 einstellen.

Der asymmetrische Ist-Verlauf 31 des Schwingungssignals 28 kann zu einer effektiven Kraft 32 führen, die vom Anschlag 34 weg zeigt (in Figur 2 mittels eines großen Pfeils angedeutet) und in einem Positionsdrift des Kupplungselements 18 weg vom Anschlag 34 resultiert (in Figur 2 mittels einer von der Nullachse 33 in die zweite Richtung 22 verschobenen, gestrichelten Linie angedeutet).

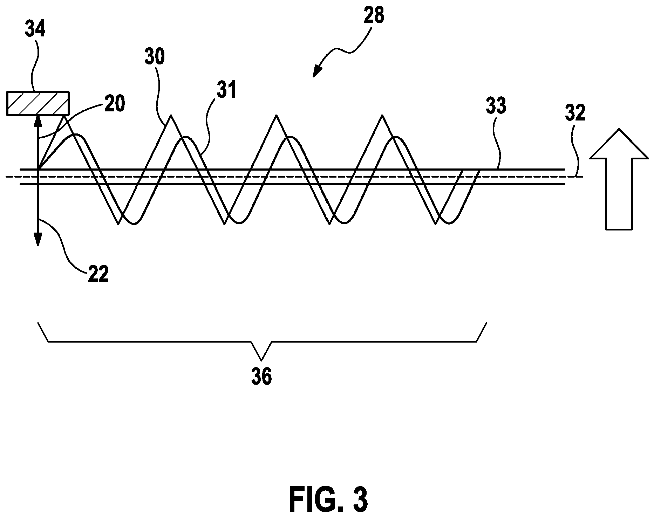

Figur 3 zeigt ein Schwingungssignal 28 gemäß einem ersten Ausführungsbeispiel. Der Soll-Verlauf 30 des Schwingungssignals 28 ist symmetrisch in Bezug auf die Nullachse 33 ausgebildet (vgl. Bz. 36). Der Soll-Verlauf 30 des Schwingungssignals 28 ist in Bezug auf die Endposition in die erste Richtung 20, in Richtung des Anschlags 34, verschoben. Mit anderen Worten, die Nullachse 33 des symmetrisch in Bezug auf die Nullachse 33 ausgebildeten Soll-Verlaufs 30 (vgl. Bz. 36) ist in die erste Richtung 20, in Richtung des Anschlags 34, verschoben.

Hieraus resultiert eine effektive Kraft 32, die ausgehend von der Endposition in Richtung des Anschlags 34, in die erste Richtung 20, ausgerichtet ist (in Figur 3 mittels eines großen Pfeils angedeutet). Hierdurch kann trotz Abweichungen bzw. Ungenauigkeiten bei der Ansteuerung des Aktuators 24 und Reibungseigenschaften innerhalb der mechanische Kette eine effektive Kraft 32 in die erste Richtung 20, in Richtung des Anschlags 34, erzeugt werden, die einen Positionsdrift des Kupplungselements 18 aus der Endposition, insbesondere in Richtung weg vom Anschlag 34, verhindert.

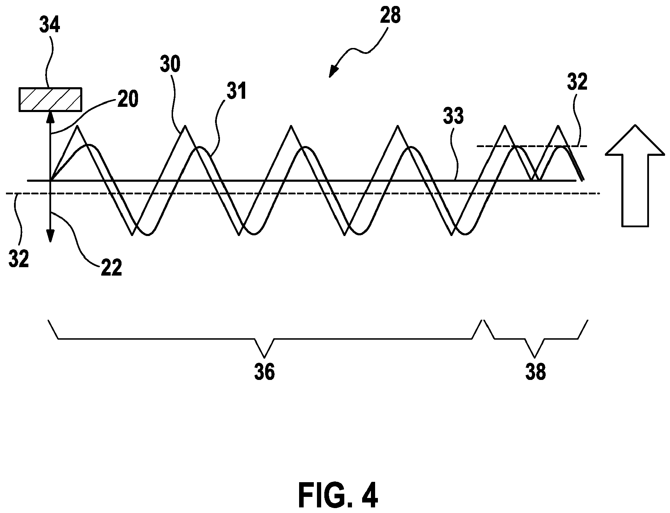

Figur 4 zeigt ein Schwingungssignal 28 gemäß einem zweiten Ausführungsbeispiel. Das dargestellte Ausführungsbeispiel unterscheidet sich von dem ersten Ausführungsbeispiel dadurch, dass die Nullachse 33 des Soll-Verlaufs 30 des Schwingungssignals 28 des Aktuators 24 der Endposition des Kupplungselements 18 entspricht.

Der Soll-Verlauf 30 des Schwingungssignals 28 des Aktuators 24 weist einen symmetrischen Abschnitt 36 und einen asymmetrischen Abschnitt 38 auf. Der symmetrische Abschnitt 36 des Soll-Verlaufs 30 entspricht dem Soll-Verlauf 30 aus dem Stand der Technik (vgl. Figur 2). D. h. die effektive Kraft 32, die aus dem symmetrischen Abschnitt 36 des Soll-Verlaufs 30 resultiert, kann in Bezug auf die Endposition in die zweite Richtung 22, in Richtung weg vom Anschlag 34, verschoben sein.

Der asymmetrische Abschnitt 38 des Soll-Verlaufs 30 weist vorliegend nur positive Werte auf, die eine Bewegung bzw. Verschiebung des Kupplungselements 18 in Richtung des Anschlags 34, in die erste Richtung 20, bewirken. Die aus dem asymmetrischen Abschnitt 38 des Soll-Verlaufs 30 erzeugte effektive Kraft 32 ist in Bezug auf die Endposition in die erste Richtung 20, in Richtung zum Anschlag 34 hin, verschoben.

Die gesamte aus dem Soll-Verlauf 30 des Schwingungssignals 28 des Aktuators 24 erzeugte effektive Kraft 32 (in Figur 4 mittels eines großen Pfeils angedeutet) setzt sich aus jeweils der effektiven Kraft 32 des symmetrischen Abschnitts 36 und des asymmetrischen Abschnitts 38 des Soll-Verlaufs 30 zusammen und ist in Richtung des Anschlags 34, in die erste Richtung 20, ausgerichtet. Die durch den asymmetrischen Abschnitt 38 des Soll-Verlaufs 30 erzeugte effektive Kraft 32 ist vorliegend größer als die durch den symmetrischen Abschnitt 36 des Soll-Verlaufs 30 erzeugte effektive Kraft 32. So kann sich in der Summe eine effektive Kraft 32 des Soll-Verlaufs 30 in die erste Richtung 20, in Richtung zum Anschlag 34 hin, einstellen.

## Patentansprüche

1. Kupplungsanordnung (10), insbesondere für eine Antriebsanordnung, umfassend:
- einen Antrieb (12), insbesondere eine elektrische Maschine,
- einen Abtrieb (14), insbesondere eine Achse einer Antriebsanordnung,
- eine Kupplungsmechanik mit einer Kupplung (16) und einem Kupplungselement (18), wobei die Kupplung (16) durch Bewegen des Kupplungselements (18) in eine erste Richtung (20) in einen geschlossenen Zustand überführt werden kann, in dem der Antrieb (12) und der Abtrieb (14) mittels des Kupplungselements (18), insbesondere drehfest, miteinander gekoppelt sind, wobei die Kupplung (16) durch Bewegen des Kupplungselements (18) in eine zweite Richtung (22) in einen geöffneten Zustand überführt werden kann, in dem der Antrieb (12) und der Abtrieb (14) mittels des Kupplungselements (18) voneinander entkoppelt sind, und
- eine Aktuierungsmechanik mit einem Aktuator (24), wobei das Kupplungselement (18) mittels des Aktuators (24) in die erste Richtung (20) und/oder in die zweite Richtung (22) bewegt werden kann,
wobei die Kupplungsanordnung (10) mindestens eine Endposition aufweist, in der das Kupplungselement (18) maximal in die erste oder die zweite Richtung (20, 22) bewegbar oder bewegt ist,
wobei die Kupplungsanordnung (10) derart eingerichtet ist, dass zur Ermittlung der Endposition das Kupplungselement (18) mittels des Aktuators (24) in die Endposition bewegbar ist und der Aktuator (24) mit einem Schwingungssignal (28) moduliert werden kann, um ein Entspannen der Kupplungs- und/oder der Aktuierungsmechanik zu fördern und ein Wegbewegen des Kupplungselements (18) aus der Endposition zu verhindern,
wobei aus einem Soll-Verlauf (30) des modulierten Schwingungssignals (28) des Aktuators (24) eine effektive Kraft (32) auf das Kupplungselement (18) resultiert.

2. Kupplungsanordnung (10) nach Anspruch 1, **dadurch gekennzeichnet, dass** in der Endposition das Kupplungselement (18) an einem Anschlag (34) anliegt, der eine weitere Bewegung des Kupplungselements (18) in Richtung des Anschlags (34) verhindert, wobei die aus dem Soll-Verlauf (30) des modulierten Schwingungssignals (28) des Aktuators (24) resultierende effektive Kraft (32) in Richtung des Anschlags (34) ausgerichtet ist.

3. Kupplungsanordnung (10) nach Anspruch 1 oder 2, **dadurch gekennzeichnet, dass** der Aktuator (24) derart ausgebildet ist, dass der Soll-Verlauf (30) des modulierten Schwingungssignals (28) des Aktuators (24) symmetrisch (36) ist.

4. Kupplungsanordnung (10) nach Anspruch 1 oder Anspruch 2, **dadurch gekennzeichnet, dass** der Aktuator (24) derart ausgebildet ist, dass der Soll-Verlauf (30) des modulierten Schwingungssignals (28) des Aktuators (24) zumindest zeitweise, insbesondere zeitlich am Ende des Soll-Verlaufs (30), asymmetrisch (38) ist, wobei die aus dem Soll-Verlauf (30) des Schwingungssignals (28) resultierende effektive Kraft (32) und deren Orientierung aus dem asymmetrischen (38) Teil des Soll-Verlaufs (30) des Schwingungssignals (28) resultiert.

5. Kupplungsanordnung (10) nach einem der voranstehenden Ansprüche,
**dadurch gekennzeichnet, dass** der Soll-Verlauf (30) des Schwingungssignals (28) in einem Bereich von 15 bis 200 Hz liegt.

6. Kupplungsanordnung (10) nach einem der voranstehenden Ansprüche,
**dadurch gekennzeichnet dass** der Aktuator (24) elektromechanisch ausgebildet ist.

7. Antriebsanordnung, insbesondere für ein Fahrzeug, mit mindestens einer Kupplungsanordnung (10) nach einem der voranstehenden Ansprüche.

8. Verfahren zur Bestimmung einer Endposition eines Kupplungselements (18) einer Kupplungsanordnung (10) umfassend die Schritte:
- Bereitstellen einer Kupplungsanordnung (10) nach einem der voranstehenden Ansprüche;
- Bewegen des Kupplungselements (18) der Kupplungsanordnung (10) in die Endposition;
- Modulieren des Aktuators (24) mit einem Schwingungssignal (28), um ein Entspannen der Kupplungs- und/oder der Aktuierungsmechanik zu fördern und ein Wegbewegen des Kupplungselements (18) aus der Endposition zu verhindern, wobei aus einem Soll-Verlauf (30) des Schwingungssignals (28) des Aktuators (24) eine effektive Kraft (32) auf das Kupplungselement (18) resultiert.

9. Verfahren nach dem voranstehenden Anspruch, **dadurch gekennzeichnet, dass** der Aktuator (24) mit einem symmetrischen (36) Soll-Verlauf (30) des Schwingungssignals (28) moduliert wird.

10. Verfahren nach Anspruch 8, **dadurch gekennzeichnet, dass** der Aktuator (24) zumindest zeitweise mit einem asymmetrischen Soll-Verlauf (30) des Schwingungssignals (28) moduliert wird, wobei die aus dem Soll-Verlauf (30) des Schwingungssignals (28) resultierende effektive Kraft (32) und deren Orientierung aus dem asymmetrischen (38) Teil des Soll-Verlaufs (30) des Schwingungssignals (28) resultiert.
